# EUROPÄISCHE PATENTANMELDUNG

(11) **EP 1 418 318 A1**
(43) Veröffentlichungstag der Anmeldung: **12.05.2004**
(21) Anmeldenummer: 02025010.6
(22) Anmeldetag: 08.11.2002
(51) Int. Cl.: F02B 37/18, F02B 37/24, F01N 3/20

(54) **Schaltungsanordnung an einem Turbolader**

(71) Anmelder: BorgWarner Inc., Troy, Michigan 48084 (US)
(72) Erfinder: Claus, Hartmut, 67269 Grünstadt (DE); Schmalzl, Hans-Peter, 64385 Reichelsheim (DE)
(74) Vertreter: Balsters, Robert

(57) **Zusammenfassung**

Eine Schaltungsanordnung an einem Turbolader weist eine Verbindungsleitung (3') zwischen einem Abgasauslaß (3) eines Verbrennungsmotors (2) und einem Zufuhrkanal (6) für Abgas des Turboladers (1) auf. Der Turbolader (1) besitzt einen Auslaß (8) für das ihm zugeführte Abgas, der an eine Katalysatorleitung (9) zur Zufuhr des Abgases zu einem Katalysator (10) angeschlossen ist. Mit der Verbindungsleitung (3') ist eine Schalteinrichtung (17, 12, 15, 20) verbunden, durch die das Abgas wahlweise unmittelbar dem Katalysator (10) oder diesem über den Turbolader (1) zuführbar ist.

## Beschreibung

### Gebiet der Erfindung

Die Erfindung bezieht sich auf eine Schaltungsanordnung an einem Turbolader mit einer Verbindungsleitung zwischen einem Abgasauslaß eines Verbrennungsmotors und einem Zufuhrkanal für Abgas des Turboladers, welcher Turbolader einen Auslaß für das ihm zugeführte Abgas besitzt, der an eine Katalysatorleitung zur Zufuhr des Abgases zu einem Katalysator angeschlossen ist.

### Hintergrund der Erfindung

Schaltungsanordnungen dieser Art sind aus den verschiedensten Dokumenten bekannt, beispielsweise aus der CA-1,270,120. Turbolader für solche Schaltungsanordnungen sind beispielsweise aus den US-A- 4,179,247, 4,780,054 oder 5,146,752 bekannt. Hierbei ist der Abgasauslaß des Verbrennungsmotors jeweils unmittelbar mit einem Zufuhrstutzen des Turboladers verbunden, der somit in allen Betriebsbereichen das Abgas zur Nutzung seiner Energie erhält.

Nun ist es einerseits vorteilhaft, einen Turbolader für einen Verbrennungsmotor vorzusehen, um dessen Effektivität zu steigern und einen Teil der Abgasenergie zu nutzen. Anderseits verlangen die heutigen strengen Auflagen an die Emissionen die Verwendung eines Katalysators, um die Abgase von Schadstoffen zu reinigen. Solche Katalysatoren erreichen jedoch ihren optimalen Reinigungsgrad erst bei bestimmten erhöhten Temperaturen.

### Kurzfassung der Erfindung

Der Erfindung liegt deshalb die Aufgabe zugrunde, möglichst wenig Emissionen bei einer hohen Energieausnutzung der Abgase zu erreichen.

Dies gelingt erfindungsgemäß dadurch, daß mit der Verbindungsleitung zwischen dem Abgasauslaß eines Verbrennungsmotors und dem Zufuhrkanal für Abgas des Turboladers eine Schalteinrichtung verbunden ist, durch die das Abgas wahlweise unmittelbar dem Katalysator oder diesem über den Turbolader zuführbar ist.

Damit kann der Benützer zu Beginn seiner Fahrt die Schalteinrichtung zunächst so einstellen, daß das Abgas ohne seinen Wärmegehalt im Turbolader einzubüßen direkt an den Katalysator geführt wird, um diesen so rasch wie möglich auf eine optimale Temperatur zu bringen.

Vorteilhaft ist jedoch eine Steuereinrichtung für die Schalteinrichtung vorgesehen, durch die Umschaltung automatisch erfolgt.

Diese Steuereinrichtung kann im Rahmen der Erfindung beispielsweise eine Zeitsteuereinrichtung mit einem Zeitgeber sein, der die Schalteinrichtung nach einer gewissen Betriebszeit automatisch vom Katalysator auf den Turbolader umschaltet. Eine Alternative könnte eine Umschaltung über das Fahrzeuggetriebe, den Tourenzähler oder einen Druckmesser sein. Bevorzugt ist es allerdings, wenn die Steuereinrichtung einen Temperatursensor aufweist, der vorzugsweise im Bereiche des Katalysators angeordnet ist. Dadurch kann man den Anforderungen für einen optimalen Katalysatorbetrieb am besten gerecht werden.

Natürlich kann die Schalteinrichtung eine "analog" schaltende sein, indem sie beispielsweise mit zunehmender Katalysatortemperatur immer mehr Abgas dem Turbolader zuführt. Bevorzugt ist es allerdings, wenn die Schalteinrichtung eine "digital" unmittelbar von einer Stellung in die andere schaltende ist.

Es wurde oben bereits darauf hingewiesen, daß der Katalysator seine optimale Wirksamkeit erst relativ spät, d.h. nach entsprechender Aufheizung, erreicht. Deshalb soll ihm ja das Abgas während dieser Zeit unmittelbar zugeführt werden. Inzwischen aber ist seine Wirkung beschränkt. Dem kann erfindungsgemäß weitgehend dadurch abgeholfen werden, dem Katalysator in der den Katalysator unmittelbar mit dem Verbrennungsmotors verbindenden Leitung ein Vorkatalysator vorgeordnet ist. Dies ist an sich ein Gedanke, der auch - wenn auch mit geringerem Effekt - bei sogenannten Wastegates angewandt werden könnte und deshalb von selbständiger erfinderischer Bedeutung ist. Denn da der Vorkatalysator in der den Katalysator unmittelbar mit dem Verbrennungsmotors verbindenden Leitung angeordnet ist, liegt er näher dem Verbrennungsmotor und erhält die volle Temperatur zu seiner Aufheizung. Er wird deshalb früher auf die Betriebstemperatur kommen als der ihm nachgeschaltete (Haupt-)Katalysator. Dieser Effekt wird noch verstärkt, wenn der Vorkatalysator eine kleinere, sich entsprechend rascher erwärmende

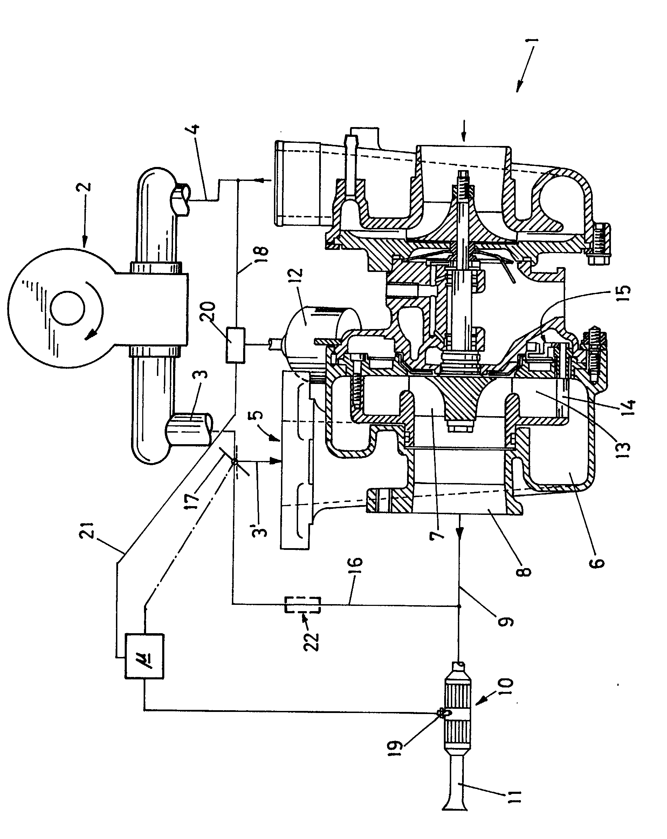

### Kurzbeschreibung der Zeichnung

Weitere Einzelheiten der Erfindung ergeben sich an Hand der nachfolgenden Beschreibung eines in der einzigen Figur der Zeichnung schematisch dargestellten Schaltbildes.

### Detaillierte Beschreibung der Zeichnung

Die dargestellte Figur zeigt einen Turbolader 1, wie er etwa der US-A-4,780,054 zu entnehmen ist. Details der Bauart dieses Turboladers 1 können also diesem Dokument entnommen werden, obwohl die Bauart des Turboladers 1 im einzelnen für die vorliegende Erfindung nicht kritisch ist.

Der Turbolader 1 ist an einen Verbrennungsmotor 2 angeschlossen, um die Energie von dessen aus einem Auslaß 3 abgegebenen Abgasen zur Komprimierung der ihm über eine Luftleitung 4 (und beispielsweise eine nicht im einzelnen dargestellten Vergaser oder Injektor) zugeführten Luft in bekannter Weise auszunutzen. Um die Abgase aus der Abgasleitung 2 zu erhalten, weist der Turbolader 1 einen mit dem Auslaß 3 über ein Teilstück 3' verbundenen Zufuhrstutzen 5 auf, so daß das ihm zugeführte Abgas über einen etwa spiraligen Zufuhrkanal 6 einem Turbinenrotor 7 zugeführt werden kann. Das aus den Schaufeln des Turbinenrotors 7 austretende Abgas geht über einen Auslaßstutzen 8 in eine Abgasleitung 9, welche zu einem Katalysator 10 führt und sodann in ein Auspuffrohr 11.

Der Turbolader 1 weist vorzugsweise ein Leitgitter veränderlicher Geometrie auf, um die Zufuhr von Abgas zum Rotor 7 zu regeln. Für diesen Zweck ist eine an sich bekannte Betätigungseinrichtung 12 vorgesehen, durch die in an sich bekannter Weise die Stellung von Leitschaufeln 13, welche rund um den Rotor 7 in einem Kranz angeordnet und um Verstellwellen 14 verstellbar sind, relativ zum Rotor 7 aus einer etwa radialen Lage in eine annähernd tangentiale zu ändern, in welch letzterer die Schaufeln den Rotor 7 im wesentlichen umgeben und abschließen, so daß kein oder fast kein Abgas aus dem Motor 2 zu ihm gelangen kann. Die Betätigungseinrichtung 12 arbeitet dabei in bekannter Weise mit einer Verstelleinrichtung 15 zusammen, die entsprechend der schon genannten US-A-4,780,054 ausgebildet sein kann, an sich aber jede beliebige Ausbildung haben kann.

Um nun den Katalysator 10 rascher auf seine optimale Arbeitstemperatur zu bringen, ist erfindungsgemäß eine den Turbolader 1 umgehende Nebenschlußleitung 16 vorgesehen, die mit dem Auslaß 3 verbunden ist. Eine Klappe oder ein anderes Umschaltventil 17 ist aus der mit vollen Linien dargestellten Lage, in der sie den Auslaß 3 mit dem Teilstück 3' und dem Zufuhrstutzen 5 verbindet. In dieser Lage erhält also der Turbolader 1 die Abgase des Verbrennungsmotors 2. In der strichliert gezeichneten Lage der Klappe 17 sperrt sie jedoch das Teilstück 3' und verbindet den Auslaß 3 mit der Nebenschlußleitung 16, so daß das Abgas aus dem Verbrennungsmotor 2 mit seinem vollen Wärmeinhalt an den Katalysator 10 geführt wird. Vorteilhaft ist die wahlweise (und deshalb nur strichliert angedeutete) Anordnung eines Vorkatalysators 22 in der den Verbrennungsmotor 2 unmittelbar mit dem Katalysator 10 verbindenden Leitung 16. Dieser Vorkatalysator 10 kann (und vorzugsweise soll auch) kleiner sein als der (Haupt-)Katalysator 10, weil seine geringere Masse sich rascher erwärmt, wobei er zusätzlich noch an einem Ort (nämlich in der unmittelbar verbindenden Leitung 16) angeordnet ist, dem er die Motorwärme praktisch verlustfrei erhält. Er wird also in der Übergangsphase nach dem Start bis zur völligen Betriebsfähigkeit des (Haupt-)Katalysators 10 bereits im Stande sein, mindestens einen Teil der Aufgabe des Katalysators 10 zu übernehmen und somit den Schadstoffausstoß schon in einem frühen Stadium herabzusetzen.

Der Vorkatalysator 22 ist in der Zeichnung des vorliegenden Ausführungsbeispiels als fest in die Leitung 16 dargestellt. Es kann jedoch vorteilhaft sein, eine weitere, der Klappe 17 entsprechende Klappe zur Umgehung des Vorkatalysators 22 und direkten Zufuhr der Abgase zum Katalysator für die Zeit unmittelbar nach dem Start des Verbrennungsmotors 2 vorzusehen, wenn sich nämlich die Abgase (und ihre Leitungen) noch nicht so erwärmt haben, daß der Vorkatalysator 22 rasch auf Betriebstemperatur gebracht werden kann. Diese Klappe könnte durch einen weiteren Temperaturfühler vor dem Vorkatalysator 22 oder an seinem Eingang gesteuert werden, oder alternativ durch einen Zeitgeber (wenn nämlich das Aufheizverhalten des Systems und somit die benötigte Zeit bekannt ist).

Um den Vorkatalysator 22 rascher auf Betriebstemperatur zu bringen, ist dieser vorzugsweise kleiner, insbesondere deutlich kleiner, ausgebildet als der Katalysator 10. Er sollte bevorzugt nur maximal 90% der zu erwärmenden Masse des Katalysators 10, jedoch noch bevorzugter maximal 75%, insbesondere etwa 50%, aufweisen. Eine noch kleinere Ausführung des Vorkatalysators 22 ist zwar denkbar, jedoch wegen der damit verbundenen geringeren Reinigungsleistung nicht sinnvoll. Man könnte jedoch auch mehr als einen Vorkatalysator in der Leitung 16 vorsehen, und diese beispielsweise in der Größe staffeln, wobei der kleinere näher dem Motor 2 ist.

Zusätzlich oder als Alternative zur der oben beschriebenen Ausführung mit der Klappe 17 kann die folgende Konstruktion vorgesehen werden. Da ja in vielen Fällen der Turbolader 1 sowieso mit einem Leitgitter veränderlicher Geometrie ausgebildet sein wird, kann man dieses an Stelle der Klappe 17 oder zusätzlich zu ihr zum Absperren des Weges des Abgases vom Auslaß 3 zum Turbinenrotor 7 heranziehen. Dazu ist zum Verständnis folgendes zu sagen.

Die Stellung der Leitschaufeln 13 wird, wie schon gesagt, durch die Betätigungseinrichtung 12 gesteuert, die im allgemeinen eine druckempfindliche Membrane aufweist, welche über eine Leitung 18 beispielsweise vom Kompressionsdruck beaufschlagbar ist. Um nun zu erreichen, daß bei kaltem Katalysator 10 die Leitschaufeln 13 ihre (tangentiale) Geschlossenlage einnehmen, ist vorteilhaft ein Temperatursensor 19, zweckmäßig im Bereiche des Katalysators 10, vorgesehen, dessen Ausgangssignale einem Prozessor µ zuführbar sind. Statt mit einem Temperatursensor könnte der Prozessor µ auch beispielsweise mit einem Zeitgeber verbunden sein, der für die Umleitung der Abgase über die Nebenschlußleitung 16 über eine vorbestimmte Zeit sorgt.

Denn der Prozessor µ ist - wie strich-punktiert angedeutet - an seinem Ausgang entweder mit der Klappe 17 und/oder mit einer Stellstufe 20 verbunden. Die Stellstufe 20 erhält einerseits die (fluidischen, mechanischen oder elektrischen) Eingangssignale aus der Leitung 18, anderseits kann sie vom Prozessor µ derart gesteuert werden, daß sie das Leitgitter mit den Schaufeln 13 in deren tangentiale Lage, d.i. die Geschlossenlage, bringt, gleichgültig welches Signal an der Leitung 18 ansteht. Das bedeutet, daß der Eingang von der vom Prozessor µ kommenden Leitung 21 die Signale der Leitung 18 übersteuert (englisch: overriding).

Sowohl im Falle der Klappe 17 als auch im Falle des durch die Einrichtung 20, 21 verschließbaren Leitgitters ergibt sich die Frage, wie diese Verstellung vor sich gehen soll. An sich wäre es denkbar, daß mit steigender Temperatur am Katalysator 10 die Klappe 17 (und/oder das Leitgitter 13-15) zunehmend den Weg zum Teilstück 3' bzw. zum Rotor 7 freigibt. Dies würde allerdings eine längere Zeit für die Erwärmung des Katalysators beanspruchen, weshalb es bevorzugt ist, wenn die Umschaltung schlagartig, also gewissermaßen "digital", erfolgt. Beispielsweise kann die Klappe mit einer Kippfeder (z.B. einer Omegafeder) versehen sein, die sie entweder in der einen oder der anderen Lage hält. Analog dazu könnte auch die Ausbildung an der Steuerstufe 20 sein.

Im beschriebenen Ausführungsbeispiel ist nur ein Eingang des Prozessors µ mit einem Sensor (19) verbunden. Es wäre jedoch möglich, mehrere verschiedene Eingänge vorzusehen und deren Signale beispielsweise nach Art einer Fuzzy-Reglung oder eines, insbesondere adaptiven, neuronalen Netzwerkes zu verknüpfen. Ebenso wäre es denkbar, den Sensor 19 in der Leitung 9 anzuordnen oder im Auspuff 11.

Im Rahmen sind zahlreiche Modifikationen möglich; beispielsweise ist nach dem dargestellten Ausführungsbeispiel die Steuerstufe 20 vom Prozessor µ separiert. Dies nicht zuletzt deshalb, weil das Drucksignal aus der Leitung 4 für gewöhnlich über eine Luftleitung 18 an die mit einer druckempfindlichen Membrane versehene Betätigungseinrichtung 12 geführt wird. Die Leitung 18 könnte aber eine elektrische Leitung sein, welche die Drucksignale an die Steuereinrichtung 20 und von dort an die Betätigungseinrichtung 12 führt. In diesem Falle könnte aber die Steuereinrichtung 20 mit dem Prozessor µ vereinigt sein.

Ferner wäre es denkbar, vom Sensor 19 eine an der Nebenschlußleitung 16 gelegene Heizung zu steuern, um eine raschere Aufheizung des Katalysators 10 zu bewirken. Eine andere Variante könnte darin gelegen sein, daß vom Sensor 19 lediglich ein Signal an eine, insbesondere visuelle, Anzeigeeinrichtung , z.B. eine Leuchtanzeige, gegeben wird, um dem Fahrer eines Automobils anzuzeigen, daß er die Klappe 17 (und/oder das Leitgitter 13) manuell zur Nebenschlußleitung 16 hin umschalten soll. In diesem Falle wäre keine automatische Steuereinrichtung vorgesehen.

Eine weitere Variante könnte darin bestehen, nur einen Teil, insbesondere den größten Teil, des vom Verbrennungsmotor 2 abgegebenen Abgases über die Nebenschlußleitung 16 zu führen, einen anderen Anteil jedoch über den Turbolader 1. Damit kann eine gewisse Kompression auch zu Beginn des Fahrbetriebes aufrecht erhalten werden, wobei der Druck dieser Kompression, also beispielsweise das über die Leitung 18 geführte Signal, dem Prozessor µ zur Steuerung der von der Klappe 17 und/oder dem Leitgitter 13 gebildeten (nun nur teilweise schließenden) Verschließeinrichtung zugeführt wird. Diese Steuerung kann - wie schon erwähnt, als Fuzzy-Logik bzw. als neuronales Netzwerk ausgeführt sein, wobei die Zeit des Fahrbetriebsbeginns, der Druck und die Temperatur, allenfalls auch die Gangschaltung und weitere Größen, als Eingabegrößen miteinander verknüpft sein können.

Auch die Ausbildung des Kompressors kann im Rahmen der Erfindung in beliebiger Weise variieren.

## Patentansprüche

1. Schaltungsanordnung an einem Turbolader (1), welche folgendes aufweist:
eine Verbindungsleitung (3') zwischen einem Abgasauslaß (3) eines Verbrennungsmotors (2) und einem
Zufuhrkanal (6) für Abgas des Turboladers (1); welcher Turbolader (1) einen Auslaß (8) für das ihm zugeführte Abgas besitzt, der an eine
Katalysatorleitung (9) zur Zufuhr des Abgases zu einem Katalysator (10) angeschlossen ist;
**dadurch gekennzeichnet, daß**
mit der Verbindungsleitung (3') eine Schalteinrichtung (17, 12, 15, 20) verbunden ist, durch die das Abgas wahlweise unmittelbar über eine Leitung (16) dem Katalysator (10) oder diesem über den Turbolader (1) zuführbar ist.

2. Schaltungsanordnung nach Anspruch 1, **dadurch gekennzeichnet, daß** eine Steuereinrichtung (19, µ) für die Schalteinrichtung (17, 12, 15, 20) vorgesehen ist.

3. Schaltungsanordnung nach Anspruch 2, **dadurch gekennzeichnet, daß** die Steuereinrichtung (19, p) mindestens einen Temperatursensor (19) aufweist, der vorzugsweise im Bereiche des Katalysators (10) angeordnet ist.

4. Schaltungsanordnung nach einem der vorhergehenden Ansprüche, **dadurch gekennzeichnet, daß** die Schalteinrichtung (17, 12, 15, 20) ein Ventil (17), insbesondere ein Klappenventil, in der Verbindungsleitung (3') aufweist.

5. Schaltungsanordnung nach einem der vorhergehenden Ansprüche, **dadurch gekennzeichnet, daß** dem Turbolader (1) ein Leitgitter (13-15) veränderlicher Geometrie zugeordnet ist, und daß eine Einrichtung (20, 21) zum Verschließen der zum Turborotor (7) führenden Abschnittes durch das Leitgitter (13-15) vorgesehen ist.

6. Schaltungsanordnung nach einem der vorhergehenden Ansprüche, **dadurch gekennzeichnet, daß** die Schalteinrichtung (17, 12, 15, 20) eine "digital" unmittelbar von einer Stellung in die andere schaltende ist.

7. Schaltungsanordnung nach einem der vorhergehenden Ansprüche; **dadurch gekennzeichnet, daß** dem Katalysator (10) in der den Katalysator unmittelbar mit dem Verbrennungsmotors (2) verbindenden Leitung (16) ein Vorkatalysator (22) vorgeordnet ist.

8. Schaltungsanordnung nach Anspruch 7, **dadurch gekennzeichnet, daß** der Vorkatalysator (22) eine kleinere, sich entsprechend rascher erwärmende Masse aufweist als der Katalysator (10).
